# EUROPEAN PATENT APPLICATION

(11) **EP 1 468 616 A1**
(43) Date of publication of application: **20.10.2004**
(21) Application number: 03425243.7
(22) Date of filing: 18.04.2003
(51) Int. Cl.: A23L 3/01, A23B 9/04, A21D 6/00

(54) **Device and method for disinfestation and improvement of preservability of foodstuffs of vegetable origin**

(71) Applicant: ITEL Telecomunicazioni S.r.l., 70037 Ruvo di Puglia (Bari) (IT)
(72) Inventor: Diaferia, Nicola, 70033 Corato (Bari) (IT)
(74) Representative: Petruzziello, Aldo

(57) **Abstract**

SUMMARY

A device (100) is described for disinfestation and improvement of the preservability of foodstuffs of vegetable origin, a method for disinfestation of foodstuffs and a method for improvement of the preservability of foodstuffs. The device comprises a reverberating cavity (12) wherein the foodstuffs are made to pass, means (5) of generating electromagnetic waves at microwave frequency, radiation means (4) coupled to said microwave generating means (5) to beam the microwaves inside said reverberating cavity (12) and mode mixing means or stirrers (10) disposed inside said reverberating chamber (12) to mix the electromagnetic wave modes.

## Description

The present invention has as its field of application the agricultural and food products sector and refers in general to a device for disinfestation and preservation of foodstuffs, to a method for disinfestation of foodstuffs of vegetable origin and a method for improving the preservability of foodstuffs.

The term foodstuffs is not limited exclusively to edible products, but also extends to any type of vegetable product that can be used as consumer goods in the agricultural and food sector, such as for example tobacco and cork for the production of bottle corks.

In particular, said invention refers to a device and a method for disinfestation of cereals, in particular wheat, from biological pests in any stage of life and also to a device and a method for improving the preservability of foodstuffs, such as soft and durum wheat flour.

Even if specific reference will be made herein to cereals and in particular to wheat and wheat flours, it is to be understood that the invention also extends to other types of foodstuffs of vegetable origin such as for example pulses, tobacco, cork and the like.

Cereal foodstuffs, from the time of harvest and above all during the stages of storage, which takes place in horizontal stores, holds of ships, storehouses, silos, containers, flour bins, port stores, etc. undergo attack by numerous infesting parasites in that they offer them a precious nutrient and a comfortable habitat.

The insects most widely identified as infesting cereal foods (to be understood both for grains and for derivatives, namely flour) are set forth in the table that follows.

| **PHYTOPHAGOUS INSECTS** | |
|---|---|
| **PRIMARY GROUPS** | *Sitophilus* |
| | *Rhyzopertha domenica* |
| | ***Tinea*** *granella* |
| | *Trogoderma granarium* |
| **SECONDARY GROUPS** | *Oryzaephilus surinamensis* |
| | *Oryzaephilus mercator* |
| | *Tenebrio molitor* |
| | *Plodia interpunctella* |
| | *Tribolium castaneum* |
| | *Tribolium confusum* |

As far as concerns microbiological contaminants, the following categories must be considered, particularly for flours:
- fungi *(Aspergillus, Penicillium),*
- yeasts,
- moulds.

These parasites cause damage to the foodstuffs, which may be:
- Direct: loss of weight, loss of seed germinating capacity, possible damage to containers in which the foodstuffs are preserved.
- Indirect: contamination (excrements, eggs, larval and pupal exuvia, fragments, hairs and silk threads, pathogenic microorganisms), heating of the attacked foodstuff mass, fermentation phenomena, acidification, etc and reduction of the food value due to the organoleptic changes, often profound, that the attack causes.

The damage from a health point of view is also considerable; in fact the possible allergic reactions caused by contact with and ingestion of mites and other insect residues must be considered.

This damage takes the form of a commercial depreciation which is distinguished into financial loss proper and loss of reputation on domestic and foreign markets. These losses must not be ignored, since it would be a mistake to take all due care to obtain maximum agricultural production, and then neglect to operate with the same decisiveness to prevent the fruits of the earth from being destroyed, albeit partially, before they are consumed.

The real problem of the quality of cereals is, however, represented by the storage phase. This is the phase in which the batches entering storage centres must be selected with speed and decision.

Together with improvement of the products in the field, which is done through genetic studies aimed at selecting the varieties that present the best commercial and quality indices and the greatest resistance in the field to attacks by parasites, an improvement must also be made in the structures designated for storage of grains.

The main causes of alteration of cereals during storage are moisture and infesting agents.

The evolution of production in the processing industry has called for high quality standards, also from the point of view of hygiene. This means absence of traces of infestation and absence of residual pesticide. During storage, the grain must be stored with a limited content of impurities and a limited moisture content, essential conditions for avoiding health and hygiene problems.

The cereal depot represents an ideal shelter for countless arthropods, of the most diverse species. Insects represent a threat because an infestation may become apparent when it is already too late to intervene. In fact, may insects spend most of their life cycle inside the kernel, thus they cannot be identified by a simple visual inspection. Furthermore, some infestations develop preferentially in the deepest part of the cereal mass, where it is difficult to discover them. Also, there are some species capable of infesting the cereal in the field, when the kernel is still inside the ear.

Given the importance of these problems, the culture of prevention both during cultivation and in the subsequent stages can be seen to be extremely important.

In the case of infestations under way, the common solution is disinfestation of the mass with insecticides; an emerging alternative is represented by controlled atmospheres as a curative step.

Treatment with chemical products represents the sole means of combating infesting agents above all if the company does not possess adequate means, trained personnel and correct monitoring procedures for the cereal during storage.

The risk connected with these interventions is that of contamination with insecticide residues. On account of this risk, precise standards already exist which set down the maximum permissible residues on foodstuffs for the various types of active principles used. Furthermore, treatment-free periods are set down, that is the minimum times that must elapse between treatment and use of the food product. Therefore, to control this risk adequately, it becomes necessary to know the times of the manufacturing processes taking place during the production process which goes from harvesting of the cereal to the mill, to bread- or pasta-making, up to sale of the end product.

Treatments for chemical control of the various pests are performed after monitoring of the mass in order to verify:
- the presence (and correct identification) of the pest(s);
- the level of infestation (chemical treatment is justified only if the damage caused to the masses by the pest is greater than the cost of treatment).

Contact insecticides or fumigants are generally used. Many companies perform disinfestation services using phosphine (PH₃) for any type of foodstuff.

Two formulations of phosphine can be used:
- aluminium phosphate (duration of treatment 7/9 days);
- magnesium phosphate (duration of treatment 3/4 days).

It should be stressed that chemical treatments, however they are performed, are effective only on live larvae or adult forms but not on eggs.

As far as concerns fumigants (phosphine is generally used), it should be remembered that these are considered "toxic gases" and their use is governed in Italy by Royal Decree No. 147 of 09-01-1927. Said decree establishes that:
- toxic gases can be used only by authorised companies;
- all those who use toxic gases must possess a suitable professional qualification;
- the use of toxic gases must be authorised in advance by the Public Health Authority.

Furthermore the use of toxic gases must take place in observance of the following rules:
- the stores must be carefully sealed to prevent product leakage;
- the work areas must be marked out and free of personnel;
- on finishing the work, a safety interval (indicated by the manufacturer) must be left to ensure that the product has dissolved;
- the masses must subsequently be aired.

As far as concerns insecticides, it should be remembered that:
- only products authorised by the Ministry of Health may be used;
- the doses for use indicated by the manufacturer must be respected, as well as the treatment-free times for the product;
- the treatment must be performed with suitable means in order to avoid dispersion of the product (as well as to guarantee the safety of the user).
Furthermore, it is essential to observe the treatment-free times indicated by the manufacturer. Failure to observe the aforegoing carries the risk of heavy penalties, even penal, and of contaminating the product, making it dangerous.

Another problem strictly related to foodstuffs is their preservation during storage. In describing the problem, specific reference will be made hereunder to wheat flours, it being understood that the invention also extends to other types of foodstuffs.

What is meant by wheat flour is the product obtained from milling and consequent sifting of soft wheat freed from extraneous substances and impurities.

What is meant by durum wheat flour is the coarsely ground granular product deriving from grinding and consequent sieving of durum wheat, freed from extraneous substances and impurities, in which the bran and germ are removed, while the endospermic part is reduced to granular parts.

Soft wheat and durum wheat flours necessarily have a moisture content which generally ranges between 14 and 15.5 % max (in Italy, Presidential Decree No. 187 of February 2001). This moisture content depends upon the moisture originally present in the wheat (about 11-13%) and the water introduced of necessity during the milling process.

These foodstuffs are normally considered microbiologically perishable, and they are very slowly perishable even if they are not subjected to conditioning, given that they contain a limited amount of free water (a_{w}), making it is very difficult for microbial cells to succeed in developing. The only danger related to these foodstuffs may be due to the presence of sporogenous bacteria such as *Bacillus cereus* and *Clostridium perfrigens*, moulds and yeasts which can develop even in the presence of very small amounts of water (water activity in the range 0,61<a_{w}<0,86).

On the contrary, the presence of a high moisture content can, in particular storage conditions, favour contamination of a fungal type; the most feared microorganisms during storage in warehouses are those belonging to the *Aspergillus* type and to a lesser degree to the *Penicillium* type since they are able to develop in fairly drastic moisture conditions, at temperature between 2 and 45° C and with a low presence of oxygen. Contamination of foodstuffs related to infesting organisms must also be borne in mind. The growth of these organisms and microorganisms can also give rise to a physico-chemical and rheological alteration of the product with damage to its qualitative, organoleptic and processing qualities. Consequently, the preservability of the product which, to date, in the usual conditions of production/packaging/storage has an average duration of 6 months, is compromised.

From what has been said, considering that flours are not always stored correctly, it is to be hoped that they have a moisture content of about 12%, which it is not advisable to obtain before completion of the production cycle, since it is essential for correct milling that the product should start from a moisture content of about 17% in the wetting/resting stage.

Having established that lowering of the moisture content can be done only after completion of the production cycle, it follows that the most natural method is to subject the flours to a drying process which nowadays is carried out mainly with various systems based on heating of the mass by conduction/convection (sometimes also irradiation) and subsequent removal of the mixture of air and extracted moisture, as will be detailed later.

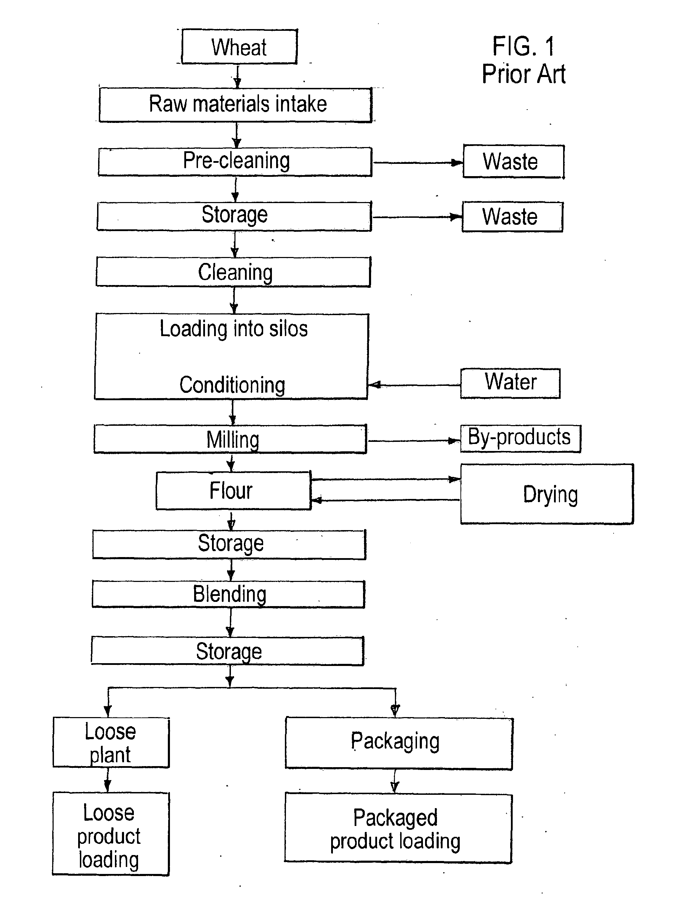

Hereunder, through the flow diagram illustrated in Figure 1, a description is provided of the technological cycle for milling of soft and durum wheat for the production of flours for human consumption, as well as for feeds for animal use, obtained from the by-products (bran, middlings, etc.).

As shown in the above-mentioned flow diagram, the position of the flour drying process within the technological production cycle can be identified at the end of the drying stage and before the start of the storage/stage of the end product.

At present, in the milling sector, there are some pants dedicated to drying of flours, but with low efficiency, since lowering of humidity levels by more than 1.5% (going for example from 14.4 to 13.0%) involves a considerable expenditure of energy, often associated with irreversible damage to the product, since conventional systems are unable to spread the heat perfectly evenly. The drawback is determined essentially by the particular particle size distribution of the flour in question (from 110 µm to 300 µm with highly variable percentages for each particle size) and by the need to use hot air as a thermal vehicle. The hot air is heated to about 90 °C with various systems such as: heat exchangers through which steam or diathermic oil passes, electrical resistances, or direct hot air generators powered by methane gas. The three typical solutions for systems having the above characteristics are as follows:
1. column system
2. fluid bed system
3. turboflash system

### Column system

In this system the flour travels by gravity inside large vertical channels (∅ 400 - 600 mm), wherein it is hit, counter current, by a fluid flow of hot air. The product is collected at the bottom of each column and carried back to the top of the next column by air transport. Between one column and another there are systems for trapping dust and highly moist hot air. This system has the characteristic of ensuring good homogenization of the product and of drying, but the through times do not allow dehumidification greater than 1.2-1.5%, therefore it is not very effective. Considering the large amount of air to be heated and moved, as well as the energy spent on lifting the flour, the system does not show good efficiency. The product generally does not appear damaged.

### Fluid bed system

In this system the flour passes through a chamber with a sloping, perforated floor on which the product moves slowly through the effect of two actions: a large amount of hot air passes through the holes in a pulsing manner causing the product to "float" and because of the slope the product tends to fall forwards, thus a typical snaking movement is created. An exhaust hood, situated at the top of the fluid bed chamber, captures almost all the moisture-saturated air for subsequent removal. With respect to the column system, it has the advantage of requiring less energy to move the flour but it is very difficult to achieve a perfect balance between the incoming and outgoing airflows since for products with a very fine particle size the largest particles tend to pile up on the floor and the finer ones to swirl inside the chamber or even to be carried out with the hot air. It is in fact a very widely used system for drying products with a large particle size, of the order of a few millimetres. Even in this case the system is not very effective but it is little more efficient.

### Turboflash systems

In this plant the flour is fed inside the drying chamber, through a launching pre-chamber which serves to give it a spiralling movement. The hot air passes through the cylindrical drying chamber from bottom to top and the flour, with a vortex movement, tends to fall down again by gravity. In this case too the moist air and dust are captured from above by means of a section formed by a ventilator, a dust separator and filter. This plant system is the most effective and efficient to date, partially reducing the drawbacks of the systems described. In fact good heating of the product can be achieved with reduced spaces and paths. However, we are still far from obtaining the desired percentages of reduction, since this always involves such a temperature increase as to cause two unwanted drawbacks: waste of energy and damage to the product.

The aim of the present invention is to eliminate the drawbacks of the prior art by providing a device that is able to allow efficient, effective and rapid disinfestation of foodstuffs from biological pests in any stage of life and at the same time is able to allow an improvement in the preservability of said foodstuffs during storage.

Said object is achieved according to the invention with the device described in appended independent claim 1.

Another object of the present invention is to overcome the drawbacks of the prior art by providing a method such as to allow efficient, effective and rapid disinfestation of foodstuffs from biological pests in any stage of life.

Said object is achieved according to the invention with the method described in appended independent claim 12.

Another object of the present invention is to overcome the drawbacks of the prior art by providing a method such as to allow an improvement in the preservability of the foodstuffs during storage.

Said object is achieved in accordance with the invention with the method described in appended independent claim 15.

Advantageous embodiments of the invention are apparent from the dependent claims.

The invention stems from observation of the fact that many infesting biological forms do not survive beyond a certain temperature called the "lethal temperature" (LT).

Therefore, the invention relates to the use of microwave electromagnetic energy exploiting the principle of thermalisation of electromagnetic energy in order to raise the body temperature of the infesting biotic forms to above their LT.

Said invention aims essentially to determine precisely the LT of the infesting forms and create a microwave apparatus that allows such a temperature distribution to be induced in the foodstuffs and in the infesting agents as to ensure that:
- The biological infesting agents are brought to a temperature higher than those that are lethal for them; and
- The temperature of the foodstuffs is not such as to cause significant organoleptic, nutritional or germination changes.

This method can be applied in the stage preceding storage of loose cereals in silos and, as described hereunder, does not disrupt or condition the existing systems from a mechanical or structural point of view.

The improvements of the invention with respect to the negative aspects of the chemical treatment of the prior art are:
- Ecological: the treatment does not cause contamination of the foodstuff or of the surrounding environment;
- Economic: the microwave disinfestations system is "in line" with the loading stage so that there is no blocking of the production plant. The cycle has a duration of a few minutes.

Other important advantages of the invention are:
- The rapidity of the treatment, of the order of few minutes;
- The absence of polluting effects in that the microwave energy is confined within a screened volume and no waste of any type is produced;
- The possibility of acting on live infesting forms whatever their stage of life.

Furthermore, the invention proposes to use said microwave device also to reduce the moisture content in the foodstuffs to ensure better preservation thereof.

In fact, as already stated in the introduction, the moisture content of wheat flours has a strong influence on the preservability of the product both from a health and hygiene viewpoint and from a qualitative viewpoint. The final moisture content is generally between 14 and 15.5 % max and can not be lowered during milling because it is necessary for correct performance of the process.

Having established that it is advisable to lower the moisture content of the product to about 12%, it has also been indicated that, to date, conventional hot air methods do not allow such strong dehydration of the product to be achieved, except at the cost of damage to the qualitative characteristics thereof as well a considerable waste of thermal and electric power.

The object of the present invention is, therefore, that of perfecting a technology that allows the following basic results to be achieved:
1. Lowering of the moisture content of the end product to a maximum of 12.5% so that:
   a. the preservability of the product is improved from a health and hygiene point of view, raising the average shelf life form 6 months to 1 year, irrespective of storage conditions;
   b. the technological quality of the product is preserved (rheological properties such as tenacity, extensibility, viscosity and fermentation capacity depending upon amylase activity);
   c. the nutritional qualities of the product are preserved (glucides with reserve functions, lipids with energy, transport and reserve functions, proteins with plastic functions, water, vitamins and mineral salts essential for the normal bodily functions);
   d. the organoleptic qualities related to aesthetic characteristics such as colour, for example, or to sensory characteristics such as smell, taste, aroma, are preserved;
   e. waste of energy is limited, considering that with the current methods a large amount of air has to be heated (about 100 Nmc/h and 2,000 kcal/h per kg of water to be removed).
2. Setting up of particular product exposure time/temperature cycles, so that changes in some qualitative characteristics and alteration of some components are produced selectively and deliberately in order to obtain specific varieties of product destined for particular uses (low fermentation flour for the confectionery industry for production of: wafers, ice cream comets, biscuits and the like)

Furthermore, it must be considered that lowering the moisture content to the above mentioned limit can ensure that possible fungal contamination is absent or reduced to a minimum in the subsequent stage of storage of the treated foodstuff.

Further characteristics of the invention will be made clearer by the detailed description that follows, referring to a purely exemplary and therefore non limiting embodiment thereof illustrated in the appended drawings, in which:
Figure 1 is a flow diagram schematically illustrating a technological milling cycle according to the prior art, in which a drying process is included,
Figure 2 is a partially axial sectional view schematically illustrating the device according to the invention, and
Figure 3 is a block diagram schematically illustrating the process control module according to the invention.

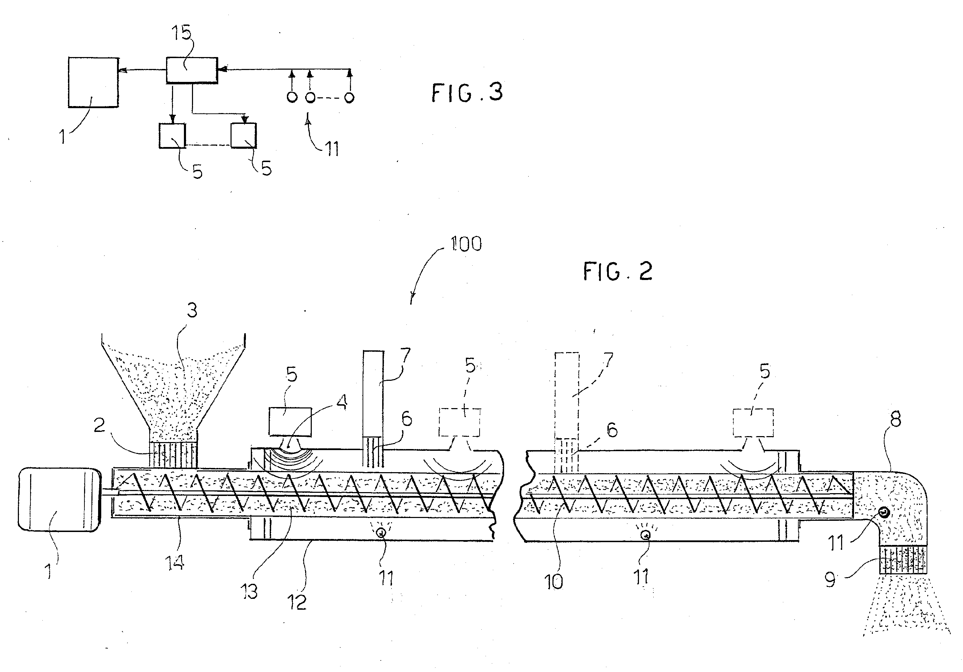

The device and method for disinfestation and preservation of foodstuffs according to the invention are described with the aid of Figures 2 ad 3. Figure 2 illustrates the device according to the invention, denoted as a whole by reference numeral 100. The device 100 comprises the following main modules:
- Reverberating or resonating wave guide 12;
- Microwave power generation module 5;
- Electromagnetic power irradiation module 4;
- Mode mixer (stirrer) 10;
- Hot-moist air extraction module 7;
- Treatment monitoring and control module 15 (Fig. 3).

The wave guide 12 consists of a metal tube hollow on the inside, circular or square in section, shielded from electromagnetic waves so as to form a reverberating or resonating chamber for electromagnetic waves at the microwave frequency. Said reverberating cavity is designed to be of such a size as to allow treatment of 3÷5 ton/h of cereals.

The microwave energy generating module is preferably a magnetron 5 electrically powered by suitable supply means. The power of the microwave sources is controlled and variable and is about 6-20 KW overall, with unit steps of 2 KW. This power is sized according to the volume and maximum flow rate of the treatment system. The working frequency of the microwaves is about 2.45 GHz, as set forth in the ISM table of frequencies for application of electromagnetic fields at radio frequencies in the industrial, scientific and medical fields.

In the device 100 one or more magnetrons 5 are preferably used, disposed on the outside of the reverberating cavity 12; for this reason the tube 12 is provided with radial holes inside which the microwave radiation modules 4 (electromagnetic coupler) are adapted, which in the specific case can be wave guides coupled to the magnetrons 5 and able to beam the microwaves inside the reverberating cavity 12.

Inside the reverberating chamber 12 there is provided a mode mixer or stirrer 10 able to mix the microwave electromagnetic radiation modes so as to obtain a multimodal type wave guide.

For said application the stirrer 10 consists of a screw-shaped propeller (auger) mounted axially inside a transfer duct 13 disposed axially inside the reverberating cavity 12. The auger 10 passes through an inlet duct or tube 14 connected to the transfer duct and disposed upstream of the reverberating cavity 12. One end of the auger 10 is driven in rotation by an electric motor 1 disposed upstream of the inlet tube 14. The electric motor 1 is controlled by an encoder or driver for regulation of the speed of rotation.

A hopper 3 for introduction of foodstuffs is disposed radially in the inlet tube 14. Between the hopper 3 and the inlet tube 14 there is an electromagnetic loading filter 2, which in the case of application to foodstuffs like cereals, can be a honeycomb loading filter.

Downstream of the reverberating cavity 12 there is an outlet (unloading) tube or duct 8 connected to the transfer duct and bent downwards in an L-shape. Inside the outlet tube 8 there is an electromagnetic unloading filter, which can be of the honeycomb type.

The outlet of the unloading tube 8 is coupled to a loading mouth of a silo intended to receive the foodstuffs. In this manner the foodstuffs introduced from the hopper 3 pass into the transfer duct 13 wherein they undergo treatment and exit from the outlet duct 8.

The module for extraction of hot-moist air comprises two air extractor devices 7 disposed radially towards the outside of the reverberating chamber 12 and coupled by means of a honeycomb filter 7 to the transfer duct 13. In this manner the air extractors 7 extract the hot-moist air from the inside of the transfer duct 13 and expel it outside the reverberating cavity 12.

The auger 10 has two basic functions:
- To transfer the cereals from the hopper 3 to the loading mouth of the silo;
- To form a multi-mode reverberating cavity with a circular or square section (wave guide) wherein said auger and the movement itself of the cereal produce mode mixing (microwave stirrer) of the electromagnetic field generated by the magnetrons 5 suitably coupled to the guide 12 therealong.

Furthermore, inside the reverberating cavity 12 there are disposed temperature detection means 11 such as optical and/or infrared sensors, able to detect the temperature of the foodstuff undergoing treatment inside the reverberating chamber.

The distribution of the electromagnetic field inside the guide cavity 12 is controlled in such a manner as to obtain a certain power distribution in the area of space passed through by the portion of cereal mass to be treated, so as to realize what, in technical terms, is called a reverberating cavity; the final goal is to cause an electromagnetic power distribution in said area of space that is on average uniform and isotropic.

The electromagnetic waves induce a heating effect in the infesting biological forms (containing water), with less marked thermal effects on the cereals which do not contain significant percentages of water.

The power of the magnetron 5 is appropriate for attainment of the lethal temperature for the infesting biological forms, for the volume of the reverberating chamber 12 and for the maximum expected flow rate.

Irradiation inside the chamber 12 and the temperature of the foodstuffs undergoing treatment are controlled by the electrical and thermal sensors 11, respectively, so as to have adequate control of the process. In fact, as shown in Figure 3, said sensors 11 are connected in negative feedback to the magnetrons 5, through the control electronics 15, to control the power generated by the magnetrons according to the temperature reached by the foodstuff inside the reverberating chamber. Furthermore the sensors 11 are connected in negative feedback to the motor 1, again through the control electronics 15, to control the speed thereof and thus the rotation of the stirrer 10.

The selective action of the heating, limited to the infesting biological forms in the case of phytophagous insects, represents the peculiar characteristic of this innovative disinfestation system which makes its use particular indicated for cereals destined for human consumption, for which no form of contamination with the toxic substances introduced by the current chemical treatment can be tolerated.

A further innovative characteristic of the device 100 consists in the possibility of carrying out effective flour drying processes with lowering of the moisture content to about 12% c.a., ensuring that the qualitative characteristics of the foodstuffs are not altered and some of them are changed selectively and deliberately in order to obtain specific product varieties.

With said system according to the invention the treatment time is extremely short. In fact, a treatment time of a few minutes is sufficient to obtain optimum disinfestation or drying results.

The following critical points have been considered for setting up of the system according to the invention:
- Determination of the lethal temperatures of the biological pests;
- Determination of the complex dielectric constant and of the thermal parameters (capacity, conductivity, emissivity) of the cereal mass (grain or flour) in movement in the reverberating cavity 12;
- Variation of the dielectric constant of the cereal masses according to granulometry, temperature and moisture;
- Impact of the moisture content of the cereal masses on the thermal treatment;
- Method of control of temperature/moisture parameters and feed-back on the power generated by the magnetrons 5;
- Modelling of the resonating cavity 12 in relation to:
   - operating frequency range;
   - admissible critical temperature;
   - moisture content to be reached;
   - treatment speed;
   - volume of reverberating cavity 12;
   - maximum flow rate of the device 100;
   - level of electromagnetic power to be generated in the reverberating chamber 12;
   - confinement of the electromagnetic energy inside the reverberating chamber 12.

Lastly, as previously stated, disinfestation of foodstuffs of vegetable origin, in particular of cereals for human consumption is carried out by the use of very toxic gases. Treatment is performed directly in the silos at ambient temperature and pressure. Removal of the toxic gases takes place through active carbon filters, which retain the gas and return clean air to the outside. The filters must be disposed of by authorised companies in accordance with regulations for special refuse, with understandable economic implications.

The lethal action of phosphine on insects in their phases of growth has long been well documented. However, it is difficult to establish to what extent this disinfestation method produces the desired effects on foodstuffs.

It should also be specified that, to comply with international standards, use of phosphine for disinfestation will most likely be banned in the near future, similarly to what is already happening for this product in soil disinfestation. In this case it will be necessary to have safe alternative technologies to toxic gases, among which the system of the present invention can certainly be included.

The new microwave method for disinfestations of cereal foodstuffs, according the invention, has the advantage of killing all the biological infesting agents in any stage of life.

Among the other advantages of microwave treatment, it should be remembered that it has a very short duration (of the order of minutes) and the cereals do not have any residue of toxicity for humans, unlike what happens with treatment with toxic gases, as already mentioned several times.

In relation to what has been said about the harmfulness or poor efficacy of the current chemical disinfestation systems and considering the growing attention of consumers to food safety, the validity of the present invention emerges clearly.

The present detailed description refers to disinfestation of foodstuffs of vegetable origin from biological pests.

However, the device 100 according to the invention can also be used for drying of foodstuffs, that is, to reduce the moisture contained in food stuffs, so as to ensure better preservability thereof.

In particular, the device 100 according to the invention can be used for wheat flours, so as to decrease the moisture content, bringing it to about 12%.

## Claims

1. A device (100) for disinfestation and improvement of preservability of foodstuffs of vegetable origin, comprising:
- a reverberating cavity (12) wherein the foodstuffs are made to pass,
- means (5) of generating electromagnetic waves at microwave frequency,
- radiation means (4) coupled to said microwave generation means (5) to beam the microwaves into said reverberating cavity (12), and
- mode mixer means or stirrers (10) disposed inside said reverberating chamber (12) to mix the electromagnetic wave modes in order to obtain uniform distribution of the electromagnetic power.

2. Device (100), according to claim 1, **characterized in that** said stirrer comprises an auger (10) able to convey the foodstuffs in a transfer duct (13) disposed inside said reverberating chamber (12).

3. Device (100) according to claim 2, **characterized in that** said auger (10) is driven in rotation by an electric motor (1) controlled in speed by a driver or an encoder.

4. Device (100) according to any one of the preceding claims, **characterised in that** the working frequency of the microwaves inside the reverberating chamber (12) is about 2.45 GHz.

5. Device (100) according to any one of the preceding claims, **characterised in that** the power of the microwave sources is controlled, variable and equal overall to about 6-20 KW with unit steps of 2 KW, sized according to the volume and maximum flow rate of the treatment system.

6. Device (100) according to any one of the preceding claims, **characterised in that** said reverberating cavity consists of a metal tube (12), hollow on the inside, circular or square in section, and shielded from electromagnetic waves at microwave frequency.

7. Device (100) according to any one of the preceding claims, **characterised in that** inside said reverberating cavity (12) are disposed temperature and electromagnetic power detection means (11) able to detect the temperature of the treated foodstuffs and the power level in said cavity.

8. Device (100) according to claim 7, **characterised in that** said temperature detection means comprise optical and/or infrared sensors (11) connected in negative feedback, by means of dedicated electronics (15), to said microwave generator means (5) for control of the microwave generation power and to the electric motor (1) for speed control.

9. Device (100) according to any one of the preceding claims, **characterised in that** upstream of said reverberating cavity (12) there is provided an inlet duct (14) with a hopper (3) for loading of the foodstuffs to be treated and downstream of said reverberating cavity there is provided an outlet duct (8) for unloading of the foodstuffs that have undergone treatment.

10. Device (100) according to claim 9, **characterised in that** in said inlet duct (14) there is disposed an electromagnetic (honeycomb) loading filter (2) and in said outlet duct (8) there is disposed an electromagnetic (honeycomb) unloading filter (9).

11. Device (100) according to any one of claims 2 to 10, **characterised in that** it comprises air extraction means (7) to extract the hot moist air from said transfer duct (13) to the outside of said reverberating chamber (12).

12. A method of disinfestation of foodstuffs of vegetable origin from biological pests in any stage of life, **characterised in that** it subjects said foodstuffs to irradiation of electromagnetic fields at microwave frequency so as to raise the temperature of biological pests to their lethal temperature at which death occurs.

13. The disinfestation method according to claim 12, **characterised in that** the working frequency of said microwave electromagnetic fields is about 2.450 GHz.

14. The disinfestation method according to claim 12 or 13, **characterised in that** it is applied to cereals and in particular to wheat and wheat flours.

15. A method for improving the preservability of foodstuffs of vegetable origin, **characterised in that** said foodstuffs are subjected to irradiation of electromagnetic fields at microwave frequency so as to cause evaporation of the water contained in the foodstuffs and thus reduce the moisture content of said foodstuffs.

16. Method for improving preservability according to claim 14, **characterised in that** it causes a reduction of the moisture contained in the foodstuffs to a threshold of about 12%.

17. Method for improving preservability according to claim 14 or 15, **characterised in that** it is applied to wheat flours.
